# EUROPEAN PATENT APPLICATION

(11) **EP 2 546 315 A1**
(43) Date of publication of application: **16.01.2013**
(21) Application number: 06820911.3
(22) Date of filing: 17.11.2006
(51) Int. Cl.: C09J 7/02, B32B 27/08, B60J 3/02

(54) **ADHESIVE SHADING FILM**

(71) Applicant: La Cadeau Compagnie B.v., 1062 EV Amsterdam (NL)
(72) Inventor: WU, Tiehan, NL-1062 EV Amsterdam (NL)
(74) Representative: Hoeben, Ferdinand Egon
(86) International application number: PCT/IB2006/003258
(87) International publication number: WO 2008/099225

(57) **Abstract**

This application offers a type of Adhesive Shading Film which can be adhered to the inner surface of a Light-permeable Base-plate, and which comprises of a Shading Layer, Backing Layer, Pattern Layer and Light-permeable Adhesive Layer; the Backing Layer has the First Surface next to the inner surface of the Light-permeable Base-plate, and the Second Surface spaced from the First Surface; the Pattern Layer is arrange able on the First Surface of the Backing Layer; the Shading Layer is preferably on the Second Surface of the Backing Layer; the Light-Permeable Adhesive Layer is preferably between the Pattern Layer and the Light-permeable Base-plate. The layered structure of this Adhesive Shading Film enables its durable functions of shading, heat insulation and energy saving.

## Description

### Field of technology

This application involves a type of Adhesive Film. Specifically, it involves a type of Adhesive Shading Film that can be applied to a Light-permeable Base-plate and that can shade light and insulate heat.

### Background art

Adhesive Film appears on the decorated glass of buildings or vehicles, etc. In most cases, a transparent Base-plate with a layer of colour-coated film is used for the coloured glass of the building, while for vehicle glass, a transparent base-plate adhered with a layer of coloured film is applied. Whether the transparent Glass Base-plate is coated or adhered with a layer of film, it has a similar energy saving function by conserving the internal temperature or inside the vehicle, shading the light and insulating the heat etc., resulting in the effect of warmth in winter and coolness in summer.

In addition, Adhesive Film on a vehicle can reduce engine wear and tear and fuel consumption, and a good Adhesive Film can efficiently insulate heat, prevent ultraviolet, protect the driver and passengers and prevent the interior from exposure to strong light. The back lighting principle of the Adhesive Film ensures that the interior is invisible to the outside so as to protect privacy, but meanwhile, the Adhesive Film is highly light-permeable so that the external view is clearly visible from inside, and without any hindrance.

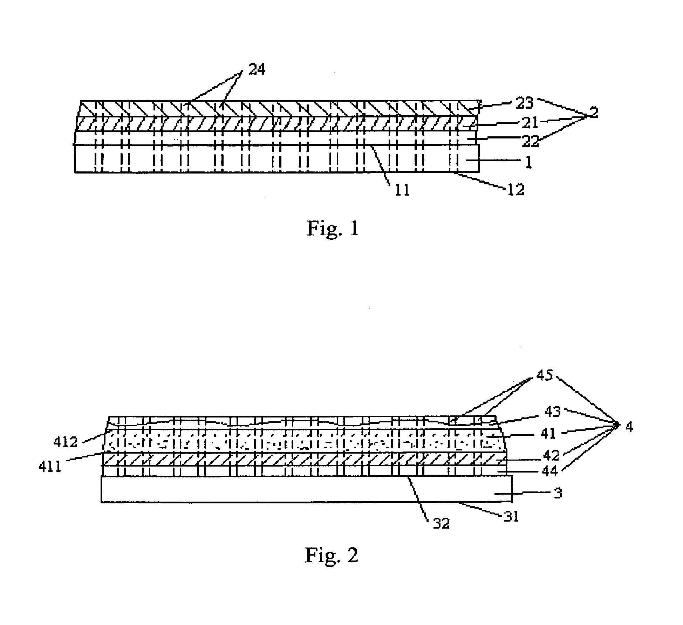

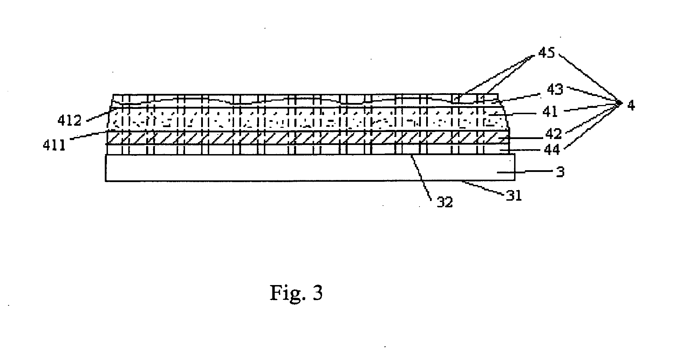

Please refer to Figure 1. The existing Adhesive Film 2 is generally adhered to the outside of the building or vehicle windscreen, namely the Glass Base-plate 1, which has the Light-facing Surface 11 and the Inner Surface 12 that is spaced from the Light-facing Surface 11. The Adhesive Film 2 joins the top of the Light-facing Surface 11 of the Glass Base-plate 1 and comprises the Backing Layer 21 that is spaced from the Light-facing Surface 11 of the Glass Base-plate 1, the Adhesive Layer 22 that adheres the Backing Layer 21 to the Glass Base-plate 1, the Pattern Layer 23 that is printed on the Backing Layer 21 and that is separated from the Glass Base-plate 1, and the multiple Perforations 24. The Perforations 24 extend through the Backing Layer 21, Adhesive Layer 22 and Pattern Layer 23, the function of which is to increase the light transmittance of the Adhesive Shading Film 2, so that the person at the side of the Inner Surface 12 of the Glass Base-plate 1 can view the outside of the Glass Base-plate 1.

In order for a more vivid pattern on the Pattern Layer 23, light-colored material is generally selected to make the Backing Layer 21 of Adhesive Film 2. But light-colored material for the Backing Layer 21 has a poor effect in light shading, resulting in an unsatisfactory shading effect, as expected. Moreover, the existing Adhesive Film 2 is adhered to the outside of the Light-facing Surface 11 of the Glass Base-plate 1, resulting in direct exposure of the Pattern Layer 23 to the external environment. Due to its design, Perforations 24 will lose their function due to dust accumulation over time, despite the good initial view. At the same time, because the Pattern Layer 23, in such a design, is directly subject to the weather and dust, the Pattern Layer 23 is also easily damaged and would not maintain the proper effect over time. Its insulating and shading function could be damaged; it is also easily strippable and prone to scratching, which will adversely affect the light transmittance and the view. If it is used on the vehicle windscreen, it will influence the judgment of the driver, resulting in serious consequences.

Therefore, it is important and necessary to offer such an Adhesive Shading Film that has the functions of shading light, insulating heat and saving energy etc. for a long period.

### Summary of the invention

This application is intended to offer an Adhesive Shading Film that comprises functions of shading light, insulating heat and saving energy etc. for a long period.

The objective of this application is realized through the following technical solution:

This application offers a type of Adhesive Shading Film which can be adhered to the inner surface of Light-permeable Base-plates, and which comprises of a Shading Layer, Backing Layer, Pattern Layer and Light-permeable Adhesive Layer; the Backing Layer has the First Surface next to the inner surface of the Light-permeable Base-plate, and the Second Surface which is spaced from the First Surface; the Pattern Layer is on the First Surface of the Backing Layer; the Shading Layer is on the Second Surface of the Backing Layer; the Light-Permeable Adhesive Layer is between the Pattern Layer and the Light-permeable Base-plate.

Multiple Perforations are configured on the abovementioned Adhesive Shading Film, which extend through the Shading Layer, Backing Layer, Pattern Layer, and Light-permeable Adhesive Layer so as to increase the light transmittance of the Adhesive Film and the clarity of the interior view. The size and form of the perforations are not fixed.

Furthermore, the abovementioned Adhesive Shading Film comprises the strippable Backing Paper which is between the Light-permeable Adhesive Layer and the Light-permeable Base-plate. When the Adhesive Shading Film is not adhered to the Light-permeable Base-plate, the Backing Paper can protect the Light-permeable Adhesive Layer. When adhering the Adhesive Film, remove the Backing Paper, then stick it to the Light-permeable Base-plate via the Light-permeable Adhesive Layer. It is mainly adhered to the building or vehicle windscreen, or poster board. Since the external light cannot reach the interior via the Adhesive Film, it functions to shade light, insulate heat and save energy. Meanwhile, it can protect interior privacy, while the view of the outside through the Adhesive Film from the inside is clear.

The abovementioned Pattern Layer can be made of different patterns and colors, allowing for aesthetics and a shading effect. A deeper color is preferred.

The abovementioned Shading Layer, Backing Layer, Pattern Layer and Light-permeable Adhesive Layer can all be rolled or reeled.

### Description of the attached figures

Fig. 1 is the structure scheme of existing Adhesive Shading Film.
Fig. 2 is the structure scheme of the Adhesive Shading Film of this application.

### Preferred embodiment

Please refer to Fig. 2 - the Structure scheme of Adhesive Shading Film 4. The Adhesive Shading Film can be adhered to the Light-permeable Base-plate 3 comprises glass material, or other light-permeable material such as Perspex, that could be a semi-transparent or fully transparent material. The Light-permeable Base-plate 3 has the Light-facing Surface 31 and the Inner Surface 32 that is parallel and spaced from the Light-facing Surface 31. Adhesive Shading Film 4 includes the Backing Layer 41 that is parallel to the Light-permeable Base-plate 3 and that has the First Surface 411 that faces the Inner Surface 32 of Light-permeable Base-plate 3, as well as the Second Surface 412 that is parallel and spaced from the First Surface 411. The Adhesive Shading Film 4 includes the Pattern Layer 42 that is printed on the First Surface 411 of Backing Layer 41, and the Shading Layer 43 that covers the Second Surface 412 of the Backing Layer 41. The Adhesive Shading Film 4 also includes the Light-permeable Adhesive Layer 44 that adheres the Pattern Layer 42 to the Inner Surface 32 of the Light-permeable Base-plate 3, and the multiple Perforations 45 that are perpendicular to the Inner Surface 32.

The Backing Layer 41 can be made of light-colored material so that the color of Pattern Layer 42 will be livelier. However, the Shading Layer 43 is e.g. made of dark-shaded material for the purpose of shading light, so that the Adhesive Shading Film 4 has a shading function. Thus, it not only has a light shading function, but can also prevent the visual color of the Pattern Layer 42 from appearing dull and dim caused by the interference of the Shading Layer 43.

The Light-permeable Adhesive Layer 44 is configurable between the Pattern Layer 42 and the Light-permeable Base-plate 3, and adheres the whole Adhesive Shading Film 4 to the Inner Surface 32 of the Light-permeable Base-plate 3. Since light can pass through the Light-permeable Adhesive Layer 44, the color of the Pattern Layer 42 is clearly visible. Configuring the Pattern Layer 42 between the Light-permeable Adhesive Layer 44 and the Backing Layer 41 can also efficiently protect the Pattern Layer 42 from damage, enhancing the durability of Adhesive Shading Film 4.

The Perforations 45 are designed as fine holes that are distributed densely and that extend through the Shading Layer 43, Backing Layer 41, Pattern Layer 42 and Light-permeable Adhesive Layer 44 so as to increase the one-way visibility of the Adhesive Shading Film 4. Thus the person on the side of the Inner Surface 32 of the Light-permeable Base-plate 3 can see the scene on the other side clearly via the Adhesive Shading Film 4, while the person on the side of the Light-facing Surface 311 of the Light-permeable Base-plate 3 can only see the Pattern Layer 42 of the Adhesive Shading Film 4 and can see nothing of the view behind the Adhesive Shading Film 4.

Therefore, the Adhesive Shading Film 4 can function as light shading by virtue of the Shading Layer 43. Besides, the design where the Pattern Layer 42 is configured between the Backing Layer 41 and the Light-permeable Adhesive Layer 44 can protect the Pattern Layer 42 from damage and prolong the service life of the Adhesive Shading Film 4. The light shading, heat insulating and energy saving function can last for a long period.

The Adhesive Shading Film of this application further comprises the Backing Paper (not shown in the Figures) which is between the Light-permeable Adhesive Layer and Light-permeable Base-plate. When Adhesive Shading Film is not adhered to the Light-permeable Base-plate, the Backing Paper can protect the Light-permeable Adhesive Layer. When adhering the Adhesive Film, remove the Backing Paper and adhere the Adhesive Shading Film to the Light-permeable Base-plate via the Light-permeable Adhesive Layer. It is mainly adhered to the windows of buildings or vehicles, or poster boards.

## Claims

1. An Adhesive Shading Film (4), which can be adhered to the inner side of the Light-permeable Base-plate (3), and which comprises a the Backing Layer (41), Pattern Layer (42) and Light-permeable Adhesive Layer (44); wherein the said Adhesive Shading Film (4) further comprises the Shading Layer (43); the said Backing Layer (41) has the First Surface (411) adjacent to the Inner Surface (32) of the Light-permeable Base-plate (3) and the Second Surface (412) spaced from the First Surface (411); the said Pattern Layer (42) being on the First Surface (411) of the Backing Layer (41); the said Shading Layer (43) being on the Second Surface (412) of the Backing Layer (41); the said Light-permeable Adhesive Layer (44), which can be adhered to the Inner Surface of Light-permeable Base-plate (3), is on the Pattern Layer (42).

2. Film according to claim 1, wherein the said Adhesive Shading Film (4) comprises a number of Perforations (45) through the Shading Layer, Backing Layer, Pattern Layer and Light-permeable Adhesive Layer.

3. Film according to Claim 1 or 2, wherein the said Adhesive Shading Film (4) further comprises a type of strippable Backing Paper arranged adjacent to the Light-permeable Adhesive Layer (44).

4. Film according to Claim 1, 2 or 3, wherein the said Shading Layer (43), Backing Layer (41), Pattern Layer (42) and Light-permeable Adhesive Layer (44) can be rolled or reeled.
